(19)

Europäisches
Patentamt
European
Patent Office
Office européen
des brevets

(11) **EP 2 264 668 A1**

(12) **EUROPEAN PATENT APPLICATION**

(43) Date of publication:
**22.12.2010 Bulletin 2010/51**

(51) Int Cl.:
***G06T 3/60*** (2006.01)

(21) Application number: **10166035.5**

(22) Date of filing: **15.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **19.06.2009 KR 20090055155**

(71) Applicant: **SiliconFile Technologies Inc.**
**Seoul (KR)**

(72) Inventors:
• **SEO, Young Ho**
**Gunpo-si**
**Gyeonggi-do (KR)**

• **KIM, Jong Phil**
**Seongnam-si**
**Gyeonggi-do (KR)**
• **SHIM, Jae Oh**
**Gwangjin-gu**
**Seoul (KR)**

(74) Representative: **Fennell, Gareth Charles et al**
**Kilburn & Strode LLP**
**20 Red Lion Street**
**London WC1R 4PJ (GB)**

(54) **Apparatus and method for rotating image without using memory**

(57) An image rotation method without using a memory includes the steps of: reading, by a JPEG encoder, an input image having mxn macroblocks (wherein "m" and "n" are natural numbers); rotating image data of the respective macroblocks by a predetermined angle in a predetermined direction when encoding in the JPEG encoder; assigning and inputting a sequence of each rotated image data when encoding in the JPEG encoder; instructing the macroblocks to be output in a sequence changed from an initial input sequence of the macroblocks through use of a program when decoding in a JPEG decoder; and outputting an image rotated by the predetermined angle in the predetermined direction.

FIG. 3

EP 2 264 668 A1

**Description**

BACKGROUND OF THE INVENTION

Field of the Invention

The present invention relates to an image rotation method, and more particularly, to an image rotation method for freely rotating and outputting an input JPEG image by a desired angle in a desired direction through the use of the characteristics of JPEG encoder and decoder which process the image in units of macroblocks, without using a large-sized memory, such as a frame buffer or line buffer.

Description of the Related Art

Joint Photographic Expert Group (JPEG) is an image compression standard, and is a graphic file format that is the most widely used in various fields, including digital cameras and images sensors (CIS), due to a high compression efficiency. A function of rotating an image by an angle desired by the user is a requisite which every application must have possessed.

In order to rotate image data, which has been input to a JPEG encoder, at the time of decoding, the image data must be rearranged according to a rotation direction in units of macroblocks, so that it is necessary to use a large-sized memory, such as a frame buffer or line buffer.

The conventional technology requires using a large-sized memory, such as a frame buffer or line buffer, in order to implement an image rotation function, thereby having a problem of increasing a circuit size.

SUMMARY OF THE INVENTION

Accordingly, the present invention has been made in an effort to solve the problems occurring in the related art, and provides a method for freely rotating an image by a desired angle in a desired direction through the use of the characteristics of JPEG encoder and decoder which process the image in units of macroblocks, without using a large-sized memory, such as a frame buffer or line buffer.

According to one aspect of the present invention, there is provided an image rotation method without using a memory includes the steps of: reading, by a JPEG encoder, an input image having mxn macroblocks (wherein "m" and "n" are natural numbers); rotating image data of the respective macroblocks by a predetermined angle in a predetermined direction when encoding in the JPEG encoder; assigning and inputting a sequence of each rotated image data when encoding in the JPEG encoder; instructing the macroblocks to be output in a sequence changed from an initial input sequence of the macroblocks through use of a program when decoding in a JPEG decoder; and outputting an image rotated by the predetermined angle in the predetermined direction.

BRIEF DESCRIPTION OF THE DRAWINGS

Other features and advantages of the present invention will become more apparent after a reading of the following detailed description taken in conjunction with the drawings, in which:

FIG. 1 is block diagram illustrating the configuration of an apparatus which is configured to implement a method for rotating and outputting an image according to an embodiment of the present invention;
FIG. 2 is a view illustrating the configuration of an image, and a procedure of rotating a macroblock by 90 degrees counterclockwise according to an embodiment of the present invention;
FIG. 3 is a view illustrating a method of rotating an input image by 90 degrees counterclockwise and outputting the rotated image by changing the output sequence of macroblocks at the time of decoding according to an embodiment of the present invention; and
FIG. 4 is a flowchart illustrating a method for rotating an image according to an embodiment of the present invention.

DETAILED DESCRIPTION OF PREFERRED EMBODIMENTS

Reference will now be made in greater detail to a preferred embodiment of the invention, an example of which is illustrated in the accompanying drawings. Wherever possible, the same reference numerals will be used throughout the drawings and the description to refer to the same or like parts.

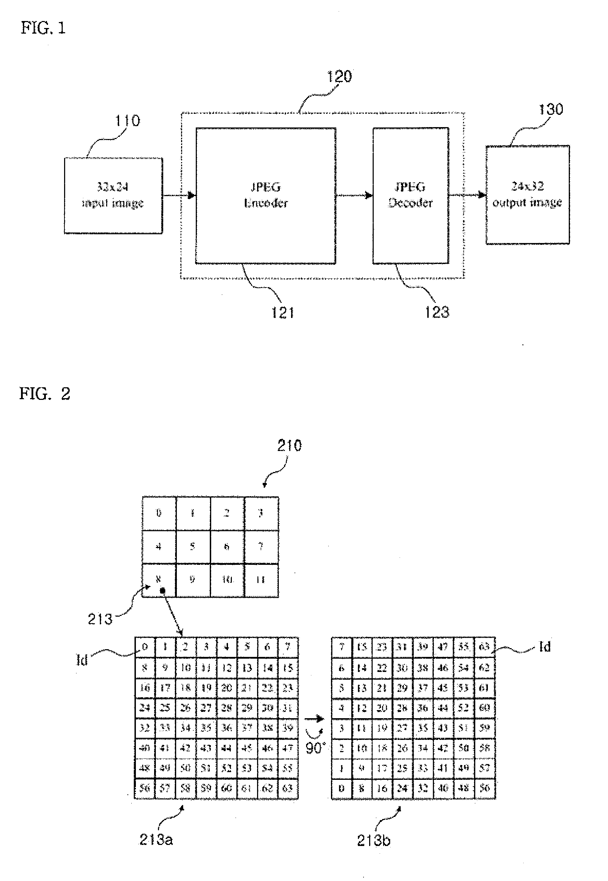

FIG. 1 is block diagram illustrating the configuration of an apparatus which is configured to implement a method for rotating and outputting an image according to an embodiment of the present invention.

Referring to FIG. 1, there are shown an input image 110, a JPEG processing system 120, and an output image 130, wherein the input image 110 is rotated by a desired angle, such as 90 degrees, 180 degrees, etc., through the JPEG processing system 120, and thus the output image 130 is displayed.

As shown in FIG. 2, when the input image 110 has 3×4 macroblocks, and each macroblock contains image data (ID) having a size of 8×8, the input image 110 has an image size of 32×24.

The JPEG processing system 120 includes a JPEG encoder 121 and a JPEG decoder 123. The JPEG encoder 121 includes a forward discrete cosine transform (FDCT) section, a quantization section, a zigzag scan section, and a variable length coding (VLC) section. The forward discrete cosine transform (FDCT) section functions to transform data from a spatial domain into a frequency domain, and the quantization section functions to quantize the data in the frequency domain using a predetermined scale. The zigzag scan section functions to arrange data so that Huffman coding can be performed, and the variable length coding (VLC) section functions to encode variable-length data through the use of a Huffman table.

FIG. 2 is a view illustrating the configuration of an image, and a procedure of rotating a macroblock by 90 degrees counterclockwise according to an embodiment of the present invention.

Referring to FIG. 2, an input image 210 has macroblocks (0, 1, 2, ..., 10, 11 according to a matrix sequence) of a 3×4 matrix, and each macroblock contains image data 213a (0, 1, 2, ..., 62, 63 in regular sequence)of an 8×8 matrix. Left-hand image data 213a represents image data in a pre-rotation state, and light-hand image 213b represents image data in a post-rotation state.

Hereinafter, a method of rotating the macroblocks of an input image by 90 degrees counterclockwise will be described in detail with reference to FIGs. 1 and 2.

When performing an encoding operation, the JPEG encoder 121 assigns an input sequence (0, 1, 2, ..., 10, 11 according to the matrix sequence) of macroblocks including the respective pieces of image data 213b, which are pre-rotated by 90 degrees counterclockwise, and then sequentially inputs the assigned macroblocks to the first block, i.e. the forward discrete cosine transform (FDCT) section.

In detail, when image data in units of macroblocks is input to the FDCT through a line buffer, such as an SRAM, the image data in units of macroblocks 213 is converted into image data 213b rotated by a desired angle in a desired direction (e.g. by 90 degrees counterclockwise) through an address control of the line buffer, and is then input to the FDCT.

Accordingly, it is possible to solve a problem in the conventional art that requires a memory, such as a frame buffer or line buffer, for rearranging image data in the same angle and direction as those of rotation to be performed in units of macroblocks when a JPEG decoder decodes non-rotated image data input to a JPEG encoder.

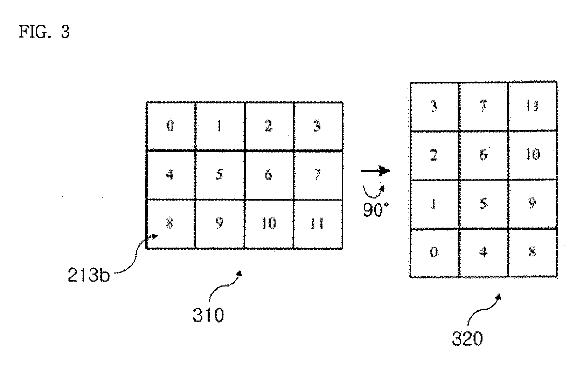

FIG. 3 is a view illustrating a method of rotating an input image by 90 degrees counterclockwise and outputting the rotated image by changing the output sequence of macroblocks at the time of decoding according to an embodiment of the present invention.

Referring to FIG. 3, an input image 310 has macroblocks of a 3×4 matrix, and each macroblock contains image data 213b of the macroblock, which has been pre-rotated by 90 degrees counterclockwise at the time of encoding.

Hereinafter, a method of changing the output sequence of macroblocks so that the JPEG decoder 123 can decode the macroblocks in a sequence changed from that in which the macroblocks have initially been input will be described in detail with reference to FIG. 1 and 3.

Equations 1 and 2 below represent solutions pre-programmed to generate a pre-calculated coordinate signal (e.g. flag signal) representing the sequence of macroblocks of an image to be output in the respective macroblocks of an input image. Here, it can be understood that, when the Equations are implemented simply by software, an input image of a 3×4 matrix can be rotated by 90 degrees counterclockwise and be output as an image of a 4×3 matrix without using an additional memory.

$$n'(n) = (mb\_width \times mb\_height) - mb\_height \times (n+1)$$
$$(wherein\ n = 0,1,2,3) \qquad \text{...... (1)}$$

$$n'(n) = n'(n-4) + 1\ (wherein\ n = 4,5,...,10,11) \qquad \text{.................. (2)}$$

Here, "n'" represents an output sequence of macroblocks, "n" represents an input sequence of macroblocks, "mb_width" represents the number of macroblocks constituting a horizontal image, and "mb_height" represents the number of macroblocks constituting a vertical image.

According to an embodiment of the present invention, when macroblocks of a 3×4 matrix are input in an input sequence 'n' of 0, 1, 2, ..., 10, and 11 according to the matrix sequence, mb_width = 4, and mb_height = 3. Therefore, in the case where n = 0, 1, 2, 3, when Equation 1 is applied, n'(0)=9, n'(1)=6, n'(2)=3, and n'(3)=0. In addition, in the case where n = 4, 5, 6, 7, 8, 9, 10, 11, when Equation 2 is applied, n'(4)=10, n'(5)=7, n'(6)=4, n'(7)=1, n'(8)=11, n'(9)=8, n'(10)=5, and n'(11)=2.

That is to say, when the macroblocks are rearranged in an output sequence n' to have a 4×3 matrix, n'(3)=0 n'(7)=1, n'(11)=2, n'(2)=3, n'(6)=4, n'(10)=5, n'(1)=6, n'(5)=7, n'(9)=8, n'(0)=9, n'(4)=10, and n'(8)=11. Here, it can be understood that, when the rearranged macroblocks are expressed with respect to the input sequence "n" of macroblocks, the macroblocks are output in a sequence of 3, 7, 11, 2, 6, 10, 1, 5, 9, 0, 4, and 8, as shown in the light hand 320 of FIG. 3.

Although the above embodiment has been described about a method of rotating an input image having a size of 3×4 by 90 degrees counterclockwise, it goes without saying that the present invention can be applied for the purpose of implementing various methods of rotating an input image having a size of m×n (wherein "m" and "n" are natural numbers) clockwise or counterclockwise by 90 degrees, 180 degrees, 270 degrees, or 360 degrees.

A normalized equation for applying the present invention to the cases of rotating an input image having a size of m×n

(wherein "m" and "n" are natural numbers), i.e. an input image where mb_width = n, and mb_height = m, counterclockwise by 90 degrees, 180 degrees, and 270 degrees (or clockwise by 270 degrees, 180 degrees, and 90 degrees) is regulated as follows.

1) Case of rotating an image by 90 degrees counterclockwise (and case of rotating an image by 270 degrees clockwise.

$$n'(n) = (mb\_width \times mb\_height) - mb\_height \times (n+1)$$
$$(wherein\ n = 0 \sim mb\_width - 1) \qquad \cdots\cdots\cdots \langle 3 \rangle$$

$$n'(n) = n'(n - mb\_width) + 1$$
$$(wherein\ n = mb\_width \sim (mb\_width \times mb\_height - 1)) \qquad \cdots\cdots\cdots \langle 4 \rangle$$

2) Case of rotating an image by 180 degrees counterclockwise (and case of rotating an image by 180 degrees clockwise.

$$n'(n) = (mb\_width \times mb\_height) - (n+1)$$
$$(wherein\ n = 0 \sim (mb\_width \times mb\_height - 1) \qquad \cdots\cdots\cdots\cdots \langle 5 \rangle$$

$$n'(n) = n'(n - mb\_width) + 1$$
$$(wherein\ n = mb\_width \sim (mb\_width \times mb\_height - 1)) \qquad \cdots\cdots\cdots \langle 6 \rangle$$

3) Case of rotating an image by 270 degrees counterclockwise (and case of rotating an image by 90 degrees clockwise.

$$n'(n) = (mb\_width \times mb\_height) - (n+1)$$
$$(wherein\ n = 0 \sim mb\_width) \qquad \cdots\cdots\cdots\cdots \langle 7 \rangle$$

$$n'(n) = n'(n - mb\_width) - 1$$
$$(wherein\ n = mb\_width \sim (mb\_width \times mb\_height - 1)) \quad \cdots\cdots\cdots\cdots\cdots\cdots \quad (8)$$

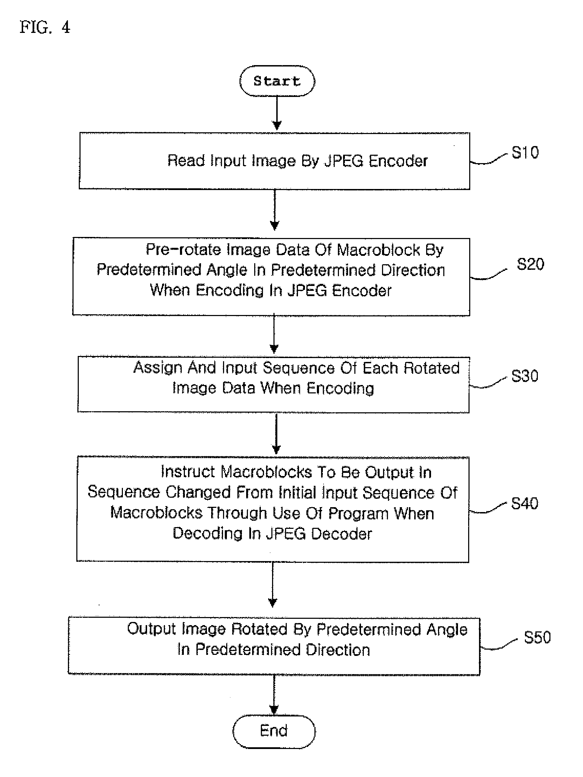

FIG. 4 is a flowchart illustrating a method for rotating an image according to an embodiment of the present invention.

In step 10, a JPEG encoder reads an input image having a predetermined size.

In step 20, when encoding, the JPEG encoder pre-rotates image data in each macroblock by a predetermined angle in a predetermined direction as desired by the user.

In step 30, when encoding, the JPEG encoder assigns and inputs a sequence of the macroblocks, of which image data has been rotated in step 20.

The input sequence corresponds to a matrix sequence (i.e. a regular sequence of 0, 1, 2, ..., 11) with respect to 3x4 macroblocks corresponding to the respective groups of rotated image data.

In step 40, at the time of decoding by a JPEG decoder, the input macroblocks are instructed to be output in a sequence changed from an initial input sequence through the use of a program.

The method of rotating the input image having a size of $3 \times 4$ macroblocks by 90 degrees counterclockwise through the use of the program has been described above in detail, so a detailed description thereof will be omitted.

In step 50, an image rotated by the predetermined in the predetermined direction is output, as assigned by the program in step 40.

As is apparent from the above description, the present invention provides a method for rotating a JPEG output image by a desired angle in a desired direction without using a memory, thereby preventing the overhead due to the use of a memory from occurring, and minimizing the circuit size, so that the method can be applied to recently small-sized applications.

Although preferred embodiments of the present invention have been described for illustrative purposes, those skilled in the art will appreciate that various modifications, additions and substitutions are possible, without departing from the scope and the spirit of the invention as disclosed in the accompanying claims.

## Claims

1. A method for rotating an image without using a memory, the method comprising the steps of:

   (a) reading, by a JPEG encoder, an input image having m×n macroblocks (wherein "m" and "n" are natural numbers);
   (b) rotating image data of the respective macroblocks by a predetermined angle in a predetermined direction when encoding in the JPEG encoder;
   (c) assigning and inputting a sequence of each rotated image data when encoding in the JPEG encoder;
   (d) instructing the macroblocks to be output in a sequence changed from an initial input sequence of the macroblocks through use of a program when decoding in a JPEG decoder; and
   (e) outputting an image rotated by the predetermined angle in the predetermined direction.

2. The method according to claim 1, wherein, in step (b), the image data of the respective macroblocks is rotated by the predetermined angle in the predetermined direction through an address control of a line buffer.

3. The method according to claim 2, wherein, in step (b), the image data is rotated counterclockwise by 90 degrees, 180 degrees, or 270 degrees.

4. The method according to claim 2, wherein, in step (b), the image data is rotated clockwise by 90 degrees, 180 degrees, or 270 degrees.

5. The method according to claim 1, wherein, in step (c), an input sequence of the mxn macroblocks (wherein "m" and "n" are natural numbers) corresponding to the respective rotated image data is assigned in accordance with a matrix sequence and is sequentially input.

6. The method according to claim 1, wherein, in step (d), the program generates a coordinate signal assigning an output sequence of macroblocks in order to match the input image with rotation direction and angle to be output.

7. An apparatus for rotating an image without using a memory, the apparatus comprising a JPEG processing system, the JPEG processing system comprising a JPEG encoder and a JPEG decoder for implementing steps (a) to (e) of the method according to claim 1.

8. The apparatus according to claim 7, wherein the JPEG processing system is mounted in an application capable of processing a JPEG image.

9. The apparatus according to claim 8, wherein the application corresponds to one of a cellular phone, a PDA, and a PMP.

FIG. 1

FIG. 2

FIG. 3

| 0 | 1 | 2 | 3 |
|---|---|---|---|
| 4 | 5 | 6 | 7 |
| 8 | 9 | 10 | 11 |

213b

310

90°

| 3 | 7 | 11 |
|---|---|---|
| 2 | 6 | 10 |
| 1 | 5 | 9 |
| 0 | 4 | 8 |

320

FIG. 4

```
                    ┌─────────────┐
                    │    Start    │
                    └─────────────┘
                           │
                           ▼
        ┌───────────────────────────────────────┐
        │     Read Input Image By JPEG Encoder   │──── S10
        └───────────────────────────────────────┘
                           │
                           ▼
        ┌───────────────────────────────────────┐
        │  Pre-rotate Image Data Of Macroblock By│
        │ Predetermined Angle In Predetermined   │──── S20
        │   Direction When Encoding In JPEG      │
        │             Encoder                    │
        └───────────────────────────────────────┘
                           │
                           ▼
        ┌───────────────────────────────────────┐
        │  Assign And Input Sequence Of Each     │──── S30
        │    Rotated Image Data When Encoding    │
        └───────────────────────────────────────┘
                           │
                           ▼
        ┌───────────────────────────────────────┐
        │  Instruct Macroblocks To Be Output In  │
        │ Sequence Changed From Initial Input    │
        │ Sequence Of Macroblocks Through Use Of │──── S40
        │   Program When Decoding In JPEG Decoder│
        └───────────────────────────────────────┘
                           │
                           ▼
        ┌───────────────────────────────────────┐
        │  Output Image Rotated By Predetermined │──── S50
        │    Angle In Predetermined Direction    │
        └───────────────────────────────────────┘
                           │
                           ▼
                    ┌─────────────┐
                    │     End     │
                    └─────────────┘
```

Europäisches
Patentamt

European
Patent Office

Office européen
des brevets

# EUROPEAN SEARCH REPORT

Application Number

EP 10 16 6035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 99/06953 A1 (OAK TECHNOLOGY INC [US]) 11 February 1999 (1999-02-11) * page 14, line 15 - line 18 * ----- | 1-9 | INV. G06T3/60 |
| X | EP 0 549 316 A2 (XEROX CORP [US]) 30 June 1993 (1993-06-30) * abstract; claim 1 * ----- | 1-9 | |
| X | EP 0 235 456 A2 (CANON KK [JP]) 9 September 1987 (1987-09-09) * page 14, line 10 - line 13; figure 37 * ----- | 1-9 | |
| A | EP 1 840 820 A1 (RESEARCH IN MOTION LTD [CA]) 3 October 2007 (2007-10-03) * the whole document * ----- | 1-9 | |
| A | US 2005/068327 A1 (TSUMURA KEIICHI [JP] ET AL) 31 March 2005 (2005-03-31) * the whole document * ----- | 1-9 | |
| A | US 2001/019637 A1 (ROBEY JOSHUA [US] ET AL) 6 September 2001 (2001-09-06) * the whole document * ----- | 1-9 | TECHNICAL FIELDS SEARCHED (IPC) G06T |
| A | EP 0 744 711 A2 (CANON KK [JP]) 27 November 1996 (1996-11-27) * the whole document * ----- | 1-9 | |
| A | EP 0 149 119 A2 (IBM [US]) 24 July 1985 (1985-07-24) * the whole document * ----- | 1-9 | |

The present search report has been drawn up for all claims

| Place of search | Date of completion of the search | Examiner |
|---|---|---|
| Munich | 26 October 2010 | Pierfederici, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 16 6035

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2010

| Patent document cited in search report | | Publication date | Patent family member(s) | | Publication date |
|---|---|---|---|---|---|
| WO 9906953 | A1 | 11-02-1999 | US 6223181 | B1 | 24-04-2001 |
| EP 0549316 | A2 | 30-06-1993 | DE 69231090 | D1 | 29-06-2000 |
| | | | DE 69231090 | T2 | 28-09-2000 |
| | | | JP 3151788 | B2 | 03-04-2001 |
| | | | JP 5307601 | A | 19-11-1993 |
| EP 0235456 | A2 | 09-09-1987 | DE 3650717 | D1 | 29-04-1999 |
| | | | DE 3650717 | T2 | 16-09-1999 |
| | | | DE 3650764 | D1 | 22-11-2001 |
| | | | DE 3650764 | T2 | 11-07-2002 |
| | | | DE 3650771 | D1 | 14-08-2002 |
| EP 1840820 | A1 | 03-10-2007 | CA 2582066 | A1 | 28-09-2007 |
| US 2005068327 | A1 | 31-03-2005 | CN 1604053 | A | 06-04-2005 |
| | | | JP 3981658 | B2 | 26-09-2007 |
| | | | JP 2005109967 | A | 21-04-2005 |
| | | | KR 20050031859 | A | 06-04-2005 |
| US 2001019637 | A1 | 06-09-2001 | NONE | | |
| EP 0744711 | A2 | 27-11-1996 | DE 69624034 | D1 | 07-11-2002 |
| | | | US 5966138 | A | 12-10-1999 |
| EP 0149119 | A2 | 24-07-1985 | CA 1222081 | A1 | 19-05-1987 |
| | | | DE 3484736 | D1 | 25-07-1991 |
| | | | JP 1739485 | C | 26-02-1993 |
| | | | JP 4026149 | B | 06-05-1992 |
| | | | JP 60146367 | A | 02-08-1985 |
| | | | US 4627020 | A | 02-12-1986 |

For more details about this annex : see Official Journal of the European Patent Office, No. 12/82

11